# EUROPÄISCHE PATENTANMELDUNG

(11) **EP 4 450 919 A1**
(43) Veröffentlichungstag der Anmeldung: **23.10.2024**
(21) Anmeldenummer: 23168227.9
(22) Anmeldetag: 17.04.2023
(51) Int. Cl.: G01B 15/00

(54) **VERFAHREN UND VORRICHTUNG ZUM BESTIMMEN MINDESTENS EINES GEOMETRIEPARAMETERS EINES LÄNGLICHEN GEGENSTANDS MIT EINER PERIODISCHEN STRUKTUR**

(71) Anmelder: SIKORA AG, 28307 Bremen (DE)
(72) Erfinder: Schmale, Sebastian, 28832 Achim (DE)
(74) Vertreter: Hauck Patentanwaltspartnerschaft mbB

(57) **Zusammenfassung**

Die Erfindung betrifft ein Verfahren zum Bestimmen mindestens eines Geometrieparameters eines länglichen Gegenstands mit einer periodischen Struktur, insbesondere eines Wellrohrs, welches eine Wellschicht mit einer periodischen Wellform umfasst, bei dem der Gegenstand mit quer zu seiner Längsrichtung divergenter Röntgenstrahlung bestrahlt wird und die Röntgenstrahlung nach Durchstrahlen des Gegenstands von einem ortsauflösenden Röntgendetektor als quer zur Längsrichtung des Gegenstands ortsaufgelöstes Messsignal detektiert wird, dadurch gekennzeichnet, dass mit der Röntgenstrahlung ein sich in Längsrichtung des Gegenstands erstreckender Messabschnitt des Gegenstands bestrahlt wird, dass der Röntgendetektor zu der den Messabschnitt durchstrahlenden Röntgenstrahlung eine Mehrzahl von quer zur Längsrichtung des Gegenstands ortsaufgelösten Messsignalen detektiert, dass die Messsignale zu einem quer zur Längsrichtung des Gegenstands ortsaufgelösten Auswertesignal zusammengeführt werden, dass in dem Auswertesignal Schichtübergänge innerhalb des Gegenstands und/oder zwischen dem Gegenstand und einem den Gegenstand umgebenden Medium an mehreren Orten des Messabschnitts identifiziert werden, und dass auf Grundlage der identifizierten Schichtübergänge mindestens ein Geometrieparameter des Gegenstands bestimmt wird. Die Erfindung betrifft außerdem eine entsprechende Vorrichtung.

## Beschreibung

Die Erfindung betrifft ein Verfahren zum Bestimmen mindestens eines Geometrieparameters eines länglichen Gegenstands mit einer periodischen Struktur, insbesondere eines Wellrohrs, welches eine Wellschicht mit einer periodischen Wellform umfasst, bei dem der Gegenstand mit quer zu seiner Längsrichtung divergenter Röntgenstrahlung bestrahlt wird und die Röntgenstrahlung nach Durchstrahlen des Gegenstands von einem ortsauflösenden Röntgendetektor als quer zur Längsrichtung des Gegenstands ortsaufgelöstes Messsignal detektiert wird.

Die Erfindung betrifft außerdem eine Vorrichtung zum Bestimmen mindestens eines Geometrieparameters eines länglichen Gegenstands mit einer periodischen Struktur, insbesondere eines Wellrohrs, welches eine Wellschicht mit einer periodischen Wellform umfasst, umfassend eine Röntgenquelle, die ausgebildet ist, den Gegenstand mit quer zu seiner Längsrichtung divergenter Röntgenstrahlung zu bestrahlen, und umfassend einen ortsauflösenden Röntgendetektor, der ausgebildet ist, die Röntgenstrahlung nach Durchstrahlen des Gegenstands als quer zur Längsrichtung des Gegenstands ortsaufgelöstes Messsignal zu detektieren.

Beispielsweise Wellrohre sind in unterschiedlichen Varianten, Formen und Größen verfügbar. Sie besitzen eine Wellschicht mit einer periodischen Wellform, beispielsweise mit sinusförmigen Wellen oder mit anderen periodischen Strukturen, wie Kastenprofilen, Trapezprofilen etc.. Ein Wellrohr kann aus der Wellschicht bestehen. Ein Wellrohr kann auch eine Innenschicht aufweisen, die in ihrer Form zum Beispiel der Form eines Glattrohrs entspricht, auf der die Wellschicht mit der periodischen Wellform angeordnet ist. Häufig bestehen Wellrohre aus Kunststoff. Es sind aber auch elektrisch leitende und/oder magnetische Materialien möglich.

Zum Beispiel bei einem Wellrohr mit Innenschicht und darauf angeordneter Wellschicht sind die Materialschichten von Innenschicht und Wellschicht im Bereich eines Bergs der periodischen Wellform unterscheidbar, da die Innenschicht und die Wellschicht in diesem Bereich durch Luft oder ein anderes Medium voneinander getrennt sind. Im Tal liegen Innenschicht und Wellschicht dagegen weitgehend direkt aufeinander, so dass nur eine summierte Schicht vorliegt. Insbesondere wenn Innenschicht und Wellschicht aus demselben Material bestehen, ist es im Tal nahezu nicht möglich, die Wandstärke auf die Wellschicht und die Innenschicht aufzuteilen.

Grundsätzlich besteht ein Interesse daran, Geometrieparameter wie Schichtdicken länglicher Gegenstände mit periodischer Struktur messtechnisch zu erfassen. Beispielsweise bei der Vermessung von Wellrohren können die Schichtübergänge zwischen mehreren Wellschichten, zwischen einer Wellschicht und Luft und/oder zwischen einer Innenschicht und Luft erfasst werden. Radien und Mittelpunktpositionen der jeweiligen Schichten lassen sich trigonometrisch über Schichtübergänge beschreiben. Daraus können wiederum die jeweiligen Schichtdicken (Wandstärken) bestimmt werden. Zum technischen Bestimmen der Schichtübergänge ist es aus der Praxis bekannt, Röntgenstrahlung auf dieses auszusenden und die Röntgenstrahlung nach Durchstrahlen des Wellrohrs mit einem Röntgendetektor zu detektieren. Die Röntgenstrahlung ist senkrecht zur Längsrichtung des Wellrohrs divergent und der Röntgendetektor nimmt ein senkrecht zur Längsrichtung des Wellrohrs ortsaufgelöstes Absorptionsbild der Röntgenstrahlung auf. Aus dem Verlauf des Messsignals kann auf Schichtübergänge des Wellrohrs zu Luft und hieraus wiederum auf Geometrieparameter, wie zum Beispiel Schichtdicken des Wellrohrs geschlossen werden.

Beispielsweise Wellrohre werden während der Messung häufig entlang ihrer Längsachse durch den Messbereich gefördert, insbesondere wenn die Messung kurz nach der Herstellung der Wellrohre erfolgen soll, was mit Blick auf ein frühzeitiges Erkennen von Produktionsfehlern und damit eine Minimierung von Ausschuss wünschenswert ist. Daraus ergibt sich das Problem einer Bewegungsunschärfe der Röntgenmessung, insbesondere aufgrund der üblicherweise relativ geringen Abtastraten der Röntgensensorik. So erfasst der Röntgendetektor Messsignale von Röntgenstrahlung, die unterschiedliche Abschnitte des Wellrohrs und damit unterschiedliche Bereiche der Periode der Wellform durchstrahlt haben. Dies erschwert die konventionelle Auswertung der Messsignale zum Bestimmen der Schichtübergänge. Um dieses Problem zu adressieren, wurde versucht, die Unschärfe der Röntgenaufnahmen zu minimieren, so dass bestenfalls nur ein Querschnittsort des Wellrohrs durch den Röntgendetektor aufgenommen wird, wodurch wiederum die Auswertung des Messsignals des Röntgendetektors mit den gängigen Ansätzen präzise möglich sein soll. Beispielsweise ist versucht worden, den Röntgendetektor im sogenannten TDI-Modus (Time Delay and Integration) zu betreiben, wobei die Auslesegeschwindigkeit eines beispielsweise als Zeilensensor ausgebildeten Röntgendetektors mit einer Fördergeschwindigkeit des Wellrohrs synchronisiert wird. Idealerweise ergibt sich dadurch eine scharfe Aufnahme des Absorptionssignals über eine Zeile des Röntgendetektors. Diese Synchronisation ist allerdings technisch aufwendig und muss bei jeder Veränderung der Produktionsbedingungen des Wellrohrs neu angepasst werden. Es ist auch vorgeschlagen worden, einen Detektor, beispielsweise einen Detektor für Terahertzstrahlung auf einem in Längsrichtung des Wellrohrs verfahrbaren Ständer anzuordnen, der synchronisiert mit der Fördergeschwindigkeit des Wellrohrs mit diesem bewegt wird. Ziel ist wiederum eine möglichst scharfe Aufnahme des Detektors. Diese Maßnahme ist allerdings konstruktiv ebenfalls sehr aufwendig und in der Praxis fehleranfällig. Wiederum ist bei jeder Veränderung der Produktionsgeschwindigkeit eine aufwendige Anpassung erforderlich.

Ausgehend von dem erläuterten Stand der Technik liegt der Erfindung die Aufgabe zugrunde, ein Verfahren und eine Vorrichtung der eingangs genannten Art bereitzustellen, mit denen mindestens ein Geometrieparameter eines länglichen Gegenstands mit periodischer Struktur in konstruktiv einfacher Weise zuverlässig und präzise bestimmt werden kann.

Die Erfindung löst die Aufgabe durch die unabhängigen Ansprüche 1 und 15. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass mit der Röntgenstrahlung ein sich in Längsrichtung des Gegenstands erstreckender Messabschnitt des Gegenstands bestrahlt wird, dass der Röntgendetektor zu der den Messabschnitt durchstrahlenden Röntgenstrahlung eine Mehrzahl von quer zur Längsrichtung des Gegenstands ortsaufgelösten Messsignalen detektiert, dass die Messsignale zu einem quer zur Längsrichtung des Gegenstands ortsaufgelösten Auswertesignal zusammengeführt werden, dass in dem Auswertesignal Schichtübergänge innerhalb des Gegenstands und/oder zwischen dem Gegenstand und einem den Gegenstand umgebenden Medium, wie zum Beispiel Luft, an mehreren Orten des Messabschnitts identifiziert werden, und dass auf Grundlage der identifizierten Schichtübergänge mindestens ein Geometrieparameter des Gegenstands bestimmt wird.

Für eine Vorrichtung der eingangs genannten Art löst die Erfindung die Aufgabe dadurch, dass die Röntgenquelle weiter ausgebildet ist, einen sich in Längsrichtung des Gegenstands erstreckenden Messabschnitt des Gegenstands mit Röntgenstrahlung zu bestrahlen, und dass der Röntgendetektor weiter ausgebildet ist, zu der den Messabschnitt durchstrahlenden Röntgenstrahlung eine Mehrzahl von quer zur Längsrichtung des Gegenstands ortsaufgelösten Messsignalen zu detektieren, dass die Vorrichtung weiter eine Auswerteeinrichtung umfasst, die ausgebildet ist, die Messsignale zu einem quer zur Längsrichtung des Gegenstands ortsaufgelösten Auswertesignal zusammenzuführen, in dem Auswertesignal Schichtübergänge innerhalb des Gegenstands und/oder zwischen dem Gegenstand und einem den Gegenstand umgebenden Medium, zum Beispiel Luft, an mehreren Orten des Messabschnitts zu identifizieren und auf Grundlage der identifizierten Schichtübergänge mindestens einen Geometrieparameter des Gegenstands zu bestimmen.

Erfindungsgemäß wird mindestens ein Geometrieparameter, zum Beispiel Radien und Mittelpunkte zweier Schichten, und damit eine Schichtdicke, eines Gegenstands, insbesondere eines Wellrohrs bestimmt. Der Gegenstand weist eine periodische Struktur auf. Wenn es sich bei dem Gegenstand um ein Wellrohr handelt, weist das Wellrohr mindestens eine Wellschicht mit einer periodischen Wellform auf, die beispielsweise sinusförmig oder kastenprofilförmig oder trapezförmig oder anderweitig periodisch ausgebildet sein kann. Beispielsweise bei einer kastenprofilförmigen Struktur können im Berg und im Tal der Wellform flache Bereiche vorliegen. Der Gegenstand kann strangförmig, insbesondere rohrförmig, ausgebildet sein. Er kann zum Beispiel aus Kunststoff bestehen. Es sind aber auch andere Materialien denkbar, zum Beispiel elektrisch leitende und/oder magnetische Materialien. Sofern es sich um ein Wellrohr handelt, kann das Wellrohr aus der Wellschicht bestehen. Es kann aber auch eine Innenschicht aufweisen, auf der die Wellschicht angeordnet ist. Die Innenschicht kann beispielsweise zylindrisch oder anderweitig ausgebildet sein. Sie kann beispielsweise kreiszylindrisch sein. Die Innenschicht kann die Form eines Glattrohrs besitzen. Die periodische Form des Gegenstands besteht aus abwechselnden Bergen und Tälern, zwischen denen an- und absteigende Flanken angeordnet sind. Sofern bei einem Wellrohr eine Innenschicht vorhanden ist, liegt die Wellschicht im Bereich der Täler regelmäßig direkt auf der Innenschicht auf. Die Innenschicht und die Wellschicht können aus demselben Material bestehen. Es kann sich aber auch um unterschiedliche Materialien handeln.

Zum Bestimmen des mindestens einen Geometrieparameters werden erfindungsgemäß Schichtübergänge innerhalb des Gegenstands, beispielsweise zwischen mehreren Wellschichten eines Wellrohrs, und/oder zwischen dem Gegenstand und dem den Gegenstand umgebenden Medium, insbesondere zwischen einer Wellschicht eines Wellrohrs und dem umgebenden Medium und/oder zwischen einer Innenschicht eines Wellrohrs und dem umgebenden Medium, bestimmt. Das umgebende Medium ist in der Regel ein gasförmiges Medium, insbesondere Luft. Es könnte aber auch ein flüssiges Medium sein. Das umgebende Medium kann auch zum Beispiel an einem Berg einer Wellschicht eines Wellrohrs zwischen der Innenschicht und der Wellschicht befindlich sein.

Zunächst ähnlich wie im Stand der Technik wird der Gegenstand vorzugsweise in einer (Hauptstrahl-)Richtung quer zu seiner Längsrichtung mit zumindest quer zur Längsrichtung des Gegenstands divergenter Röntgenstrahlung bestrahlt und die Röntgenstrahlung wird nach Durchstrahlen des Gegenstands von einem zumindest quer zur Längsrichtung des Gegenstands ortsauflösenden Röntgendetektor als ortsaufgelöstes Messsignal detektiert. Wie eingangs erläutert, wird im Stand der Technik mit aufwendigen Maßnahmen versucht, eine Orts- oder Bewegungsunschärfe des durch den Röntgendetektor aufgenommenen Messsignals zu vermeiden. In Abkehr von dieser Lehre des Standes der Technik nimmt die Erfindung eine Orts- und/oder Bewegungsunschärfe des Messsignals des Röntgendetektors nicht nur in Kauf, sondern nutzt diese für die erfindungsgemäße Messung und Auswertung gerade aus. Hierzu wird mit der Röntgenstrahlung ein sich in Längsrichtung des Gegenstands erstreckender Messabschnitt des Gegenstands bestrahlt und der Röntgendetektor detektiert zu der den Messabschnitt durchstrahlenden Röntgenstrahlung eine Mehrzahl von zumindest quer zur Längsrichtung des Gegenstands ortsaufgelösten Messsignalen. Diese aufgrund der Orts- und/oder Bewegungsunschärfe entstehenden Messsignale werden zu einem zumindest quer zur Längsrichtung des Gegenstands ortsaufgelösten Auswertesignal zusammengeführt. In diesem Auswertesignal werden Schichtübergänge innerhalb des Gegenstands und/oder zwischen dem Gegenstand und dem umgebenden Medium an mehreren Orten des Messabschnitts identifiziert. Auf Grundlage der identifizierten Schichtübergänge wird mindestens ein Geometrieparameter des Gegenstands bestimmt, zum Beispiel ebenfalls an mehreren Orten des Messabschnitts. Der Messabschnitt besitzt eine Ausdehnung in Längsrichtung des Gegenstands. Die Ausdehnung kann zum Beispiel mindestens 10 % einer Periode der periodischen Struktur des Gegenstands, beispielsweise der Wellform der Wellschicht eines Wellrohrs betragen.

Sofern vorliegend von einer Richtung quer zur Längsrichtung des Gegenstands gesprochen wird, umfasst dies sowohl eine zur Längsrichtung des Gegenstands senkrechte Richtung als auch eine zur Längsrichtung des Gegenstands schräge Richtung. Die Auswertung der erfindungsgemäßen Messsignale vereinfacht sich, wenn die Röntgenstrahlung in einer Hauptstrahlrichtung senkrecht zur Längsrichtung des Gegenstands eingestrahlt wird und die Messsignale senkrecht zur Längsrichtung des Gegenstands ortsaufgelöst sind.

Die erfindungsgemäße Ausdehnung des Sichtfelds des Röntgendetektors auf den sich in Längsrichtung des Gegenstands erstreckenden Messabschnitt kann durch eine Bewegung des Gegenstands während der Messung entlang seiner Längsachse und/oder eine Ortsauflösung des Röntgendetektors in Richtung der Längsachse des Gegenstands und/oder eine Anpassung der Belichtungszeit des Röntgendetektors erreicht werden. Es liegt ein Dualismus zwischen Orts- und Zeitunschärfe vor. Die Röntgenstrahlung ist zumindest quer zur Längsrichtung des Gegenstands divergent. Sie kann auch in Längsrichtung des Gegenstands divergent sein, also beispielsweise eine kegelförmige Abstrahlcharakteristik besitzen. Dann kann der sich in Längsrichtung des Gegenstands erstreckende Messabschnitt zeitgleich mit Röntgenstrahlung bestrahlt werden. Es ist aber auch möglich, den Messabschnitt nacheinander mit Röntgenstrahlung zu bestrahlen, insbesondere wenn der Gegenstand während der Messung entlang einer Förderrichtung, die insbesondere gleich seiner Längsachse sein kann, gefördert wird. Auch eine kombinierte Messung mit (auch) in Längsrichtung bzw. Förderrichtung des Gegenstands divergenter Röntgenstrahlung und Förderung des Gegenstands entlang seiner Längsachse bzw. einer Förderrichtung durch den Messbereich ist möglich.

Der Röntgendetektor ist zumindest quer zur Längsrichtung des Gegenstands ortsauflösend. Er kann auch in Längsrichtung des Gegenstands ortsauflösend sein. Der Röntgendetektor kann einen Szintillator und mindestens ein optisches Sensor-Array, zum Beispiel ein ein- oder zweidimensionales CCD-Array umfassen. Wenn der Röntgendetektor auch in Längsrichtung des Gegenstands ortsauflösend ist, kann dieser direkt und gegebenenfalls gleichzeitig die die unterschiedlichen Bereiche des Messabschnitts durchstrahlende Röntgenstrahlung detektieren. Es ist aber auch denkbar, dass der Röntgendetektor die die unterschiedlichen Bereiche des Messabschnitts durchstrahlende Röntgenstrahlung nacheinander detektiert, insbesondere wenn der Röntgendetektor nur quer zur Längsrichtung des Gegenstands ortsauflösend ist, es sich also um einen Zeilensensor mit nur einer Sensorzeile handelt.

Die Erfindung beruht im Gegensatz zu dem eingangs erläuterten Stand der Technik auf der Erkenntnis, dass gerade die Unschärfe der Röntgendetektoraufnahme, bei der im Absorptionsbild eine Überlagerung verschiedener Bereiche des Gegenstands entlang des Messabschnitts vorliegt, die Identifizierung für die Bestimmung geometrischer Parameter charakteristischer Merkmale erleichtert oder erst ermöglicht. Durch das Zulassen der Unschärfe der Röntgendetektoraufnahme in Längsrichtung des Gegenstands werden die Anforderungen an die Sensorik im Vergleich zum Stand der Technik erheblich reduziert und vereinfacht. Gleichzeitig steht in dem erfindungsgemäß aus Messsignalen verschiedener Bereiche entlang des Messabschnitts zusammengeführten Auswertesignal in der Summe mehr Information über die Geometrie des Gegenstands zur Verfügung als in einer scharfen Aufnahme nur eines einzigen Bereichs des Gegenstands. Damit können Geometrieparameter des Gegenstands auch im Vergleich zum Stand der Technik zuverlässig und genau bestimmt werden. Aufgrund der erfindungsgemäß bewusst genutzten Unschärfe der Röntgendetektoraufnahme werden erheblich mehr Anteile aus einer Schwingungsperiode vom Röntgendetektor erfasst. Hierdurch kann der Anteil ausgewerteter informationsbehafteter Rohrabschnitte vergrößert werden. So können bei einer scharfen Detektoraufnahme nicht gesehene Bereiche der Schwingungsperiode ebenfalls erfasst werden. Besondere Relevanz erhält dies unter Berücksichtigung der regelmäßig geringen Abtastrate solcher Röntgensysteme von beispielsweise 1 bis 10 Hz zur Erhöhung der möglichen Messpunkte. Außerdem kann erfindungsgemäß eine verbesserte Ausprägung der für die Bestimmung der Geometrieparameter charakteristischen Merkmale im Auswertesignal erreicht werden. Insbesondere wird durch die Unschärfe der Beitrag verschiedener Bereiche der periodischen Struktur, zum Beispiel einer Wellform der Wellschicht eines Wellrohrs, zum Beispiel des Berg- und Talbereichs vergrößert und die entsprechenden Merkmale prägen sich stärker im Absorptionsverlauf des Auswertesignals aus.

Wie bereits erwähnt, kann der Gegenstand, zum Beispiel das Wellrohr, gemäß einer Ausgestaltung während des Durchstrahlens mit Röntgenstrahlung entlang einer Förderrichtung gefördert werden. Die Förderrichtung kann der Längsachse des Gegenstands entsprechen. Die erfindungsgemäße Vorrichtung kann eine hierzu ausgebildete Fördereinrichtung umfassen.

Wie ebenfalls bereits erläutert, kann die den Gegenstand bestrahlende Röntgenstrahlung auch in Längsrichtung des Gegenstands divergent sein. Der Röntgendetektor kann auch in Längsrichtung des Gegenstands ortsauflösend sein, beispielsweise ein zweidimensionales Sensor-Array, zum Beispiel ein zweidimensionales CCD-Array, nebst Szintillator, insbesondere einer zweidimensionalen Szintillatorschicht, umfassen. Der Szintillator bzw. die Szintillatorschicht wandelt die empfangene Röntgenstrahlung in durch einen optischen Sensor, zum Beispiel einen CCD-Sensor, detektierbare elektromagnetische Strahlung um, beispielsweise Licht im sichtbaren oder nicht sichtbaren Wellenlängenbereich.

Wie weiter erläutert, wird durch das messtechnische Erfassen mehrerer Bereiche des Gegenstands, beispielsweise der Wellform der Wellschicht eines Wellrohrs, entlang des Messabschnitts der Informationsgehalt des Auswertesignals für die Bestimmung des mindestens einen Geometrieparameters erhöht. Es ist entsprechend nach einer Ausgestaltung möglich, dass sich der Messabschnitt über mindestens 20 %, vorzugsweise mindestens 40 %, einer Periode der periodischen Struktur, zum Beispiel der Wellform der Wellschicht eines Wellrohrs erstreckt. Besonders günstig für die erfindungsgemäße Auswertung ist es dabei, wenn unterschiedliche Abschnitte der Periode erfasst werden. Entsprechend kann nach einer weiteren Ausgestaltung vorgesehen sei, dass sich der Messabschnitt über zumindest einen Teil eines Wellenbergs und eines Wellentals und über eine Flanke zwischen dem Wellenberg und dem Wellental der periodischen Struktur, zum Beispiel der Wellform der Wellschicht eines Wellrohrs erstreckt. Durch die vorgenannten Ausgestaltungen des Sichtfelds des Röntgendetektors können einerseits mehr Schichtübergänge innerhalb des Gegenstands und/oder zwischen dem Gegenstand und dem umgebenden Medium an mehr Orten des Messabschnitts identifiziert werden. Andererseits werden die die Schichtübergänge im Auswertesignal anzeigenden charakteristischen Merkmale stärker ausgeprägt.

Erfindungsgemäß ist weiter erkannt worden, dass ein zu großer Messabschnitt, insbesondere ein Abdecken eines zu großen Bereichs der periodischen Struktur das Auswertesignal für die erfindungsgemäße Auswertung wieder verschlechtern kann. Beispielsweise kann es zu einer Verschlechterung der für die Schichtübergänge charakteristischen Merkmale des Auswertesignals und damit einer Verfälschung der Bestimmung des Geometrieparameters kommen, wenn zusätzlich zu einem vom Messabschnitt erfassten Berg der periodischen Struktur ein benachbarter Berg ebenfalls erfasst wird. Weiterhin wird davon ausgegangen, dass ein Erstrecken des Messabschnitts bzw. des Sichtfelds des Röntgendetektors über mehr als eine Periode die störungsfreie Güte der für die Schichtübergänge charakteristischen Merkmale im Auswertesignal erheblich verschlechtert. Entsprechend kann nach einer weiteren Ausgestaltung vorgesehen sein, dass sich der Messabschnitt über nicht mehr als 100 %, vorzugsweise nicht mehr als 75 %, einer Periode der periodischen Struktur, beispielsweise der Wellform der Wellschicht eines Wellrohrs, erstreckt. Weiter kann vorgesehen sein, dass sich der Messabschnitt über nicht mehr als einen Wellenberg und ein Wellental der periodischen Struktur und eine Flanke zwischen dem Wellenberg und dem Wellental der periodischen Struktur erstreckt.

Nach einer besonders praxisgemäßen Ausgestaltung kann zum Zusammenführen der Messsignale zu dem quer zur Längsrichtung des Gegenstands ortsaufgelösten Auswertesignal ein Mittelwert der über den Messabschnitt detektierten Messsignale gebildet werden. Es werden also die einzelnen über den Messabschnitt erfassten, quer zur Längsrichtung des Gegenstands ortsaufgelösten Messsignale zu einem Auswertesignal gemittelt, das wiederum quer zur Längsrichtung des Gegenstands ortsaufgelöst ist. Die Ortsauflösung quer zur Längsrichtung des Gegenstands geht bei der Mittelung nicht verloren. Es erfolgt lediglich eine Mittelung in Richtung des Messabschnitts. Wird beispielsweise ein auch in Längsrichtung des Gegenstands ortsauflösender Röntgendetektor verwendet, kann in einfacher Weise über die Sensorpixel in Längsrichtung des Gegenstands gemittelt werden. Es erfolgt also eine Integration über die Zeilen des Röntgendetektors in Längsrichtung des Gegenstands.

Nach einer weiteren Ausgestaltung können Schichtübergänge innerhalb des Gegenstands und/oder zwischen dem Gegenstand und dem umgebenden Medium, insbesondere zwischen mehreren Wellschichten eines Wellrohrs und/oder zwischen der Wellschicht eines Wellrohrs und dem umgebenden Medium und/oder zwischen einer Innenschicht eines Wellrohrs und dem umgebenden Medium, anhand von Minima und/oder Maxima und/oder Änderungen der Steigung und/oder Unstetigkeiten in dem Auswertesignal identifiziert werden. Insbesondere werden für die zu identifizierenden Schichtübergänge charakteristische und gut diskriminierbare Merkmale im Kurvenverlauf des ortsaufgelösten Auswertesignals identifiziert. Durch Wahl eines geeigneten, insbesondere ausreichend großen und nicht zu großen Messabschnitts, ist es erfindungsgemäß möglich, in dem Auswertesignal mindestens zwei, vorzugsweise mindestens drei, weiter vorzugsweise mindestens vier, beispielsweise fünf, Minima und/oder Maxima und/oder Änderungen der Steigung und/oder Unstetigkeiten für die Bestimmung der Schichtübergänge zu identifizieren. Die identifizierten Schichtübergänge liegen dabei wie erläutert an unterschiedlichen Orten entlang des Messabschnitts des Gegenstands vor.

Nach einer weiteren Ausgestaltung können die Schichtübergänge anhand der Minima und/oder Maxima und/oder Änderungen der Steigung und/oder Unstetigkeiten in dem Auswertesignal mit Algorithmen des maschinellen Lernens identifiziert werden, vorzugsweise unter Verwendung künstlicher neuronaler Netze. Solche Algorithmen der sogenannten künstlichen Intelligenz sind in der Lage, die vorgenannten charakteristischen Merkmale auch in einem in der Realität Störungen aufweisenden Auswertesignal eindeutig und zuverlässig zu identifizieren.

Als mindestens ein geometrischer Parameter kann wie bereits erwähnt eine Schichtdicke des Gegenstands, insbesondere der Wellschicht und/oder einer Innenschicht eines Wellrohrs, bestimmt werden, beispielsweise an mehreren Orten des Messabschnitts. Die Schichtdicke ist für die Bewertung der Produktionsgüte des hergestellten Gegenstands von besonderem Interesse. Werden unzulässige Abweichungen der Schichtdicken von Sollwerten erkannt, kann dies zum Beispiel in Form einer Warnmeldung durch die Auswerteeinrichtung angezeigt werden. Auch denkbar ist ein Eingriff in eine Produktionseinrichtung für das Herstellen des Gegenstands, zum Beispiel eine Extrusionsvorrichtung.

Grundsätzlich ist es auch denkbar, mehrere Röntgenquellen und Röntgendetektoren vorzusehen, die zum Beispiel aus zwei senkrecht zueinander stehenden Richtungen den Gegenstand mit Röntgenstrahlung durchstrahlen. Entsprechend kann vorgesehen sein, dass der Gegenstand aus zwei Richtungen mit zumindest quer zu seiner Längsrichtung divergenter Röntgenstrahlung bestrahlt wird, vorzugsweise in einer Hauptstrahlrichtung quer zur Längsrichtung des Gegenstands, und die Röntgenstrahlung nach Durchstrahlen des Gegenstands von mindestens zwei ortsauflösenden Röntgendetektoren als zumindest quer zur Längsrichtung des Gegenstands ortsaufgelöste Messsignale detektiert wird, wobei mit der Röntgenstrahlung aus den zwei Richtungen jeweils ein sich in Längsrichtung des Gegenstands erstreckender Messabschnitt des Gegenstands bestrahlt wird, wobei die Röntgendetektoren zu der die Messabschnitte durchstrahlenden Röntgenstrahlung jeweils eine Mehrzahl von zumindest quer zur Längsrichtung des Gegenstands ortsaufgelösten Messsignalen detektieren, und wobei die von den Röntgendetektoren detektierten Messsignale jeweils zu einem zumindest quer zur Längsrichtung des Gegenstands ortsaufgelösten Auswertesignal zusammengeführt werden, wobei in den Auswertesignalen Schichtübergänge innerhalb des Gegenstands und/oder zwischen dem Gegenstand und einem den Gegenstand umgebenden Medium an mehreren Orten des Messabschnitts identifiziert werden, und dass auf Grundlage der identifizierten Schichtübergänge mindestens ein Geometrieparameter des Gegenstands bestimmt wird.

In diesem Fall steht also eine weitere Messachse des Röntgensystems zur Verfügung. Die Ausgestaltung der Röntgenquelle und des Röntgendetektors sowie die Auswertung der Messsignale kann erfolgen wie oben und nachfolgend erläutert. Hierdurch stehen weitere Informationen über die Schichtgeometrie zur Verfügung.

Insbesondere lassen sich auf diese Weise in einfacher Weise weitere Geometrieparameter bestimmen, wie zum Beispiel Radien, Mittelpunktpositionen und auf dieser Grundlage Wanddicken, wie nachfolgend näher erläutert. So können mit zwei Messachsen zum Beispiel die Mittelpunktpositionen von einzelnen Schichten bestimmt werden. Daraus lassen sich Radien und auf dieser Grundlage Wanddicken ableiten, sofern mindestens zwei Schichtübergänge bestimmt wurden. Natürlich können auch mehr als zwei Messachsen in der erfindungsgemäßen Weise ausgebildet sein. Bei mehr als zwei Messachsen lassen sich elliptische Formen, wenn also eine Schicht zum Beispiel entlang eines Rohrumfangs unterschiedliche Radien aufweist, genauer bestimmen.

Aufgrund der Divergenz der Röntgenstrahlung und der beabstandeten Anordnung von Röntgenquelle, Gegenstand und Röntgendetektor müssen die in dem Auswertesignal identifizierten Schichtübergänge unter Berücksichtigung der bekannten Abstände insbesondere zwischen der Röntgenquelle und dem Röntgendetektor und gegebenenfalls dem Gegenstand trigonometrisch in die entsprechenden Geometrieparameter, zum Beispiel Schichtdicken, der jeweiligen Schicht umgerechnet werden. Dies ist an sich bekannt. Hierzu ist es nach einer Ausgestaltung möglich, dass zum Bestimmen des mindestens einen Geometrieparameters, zum Beispiel der Schichtdicke einer Schicht, Mittelpunktpositionen und Radien der jeweiligen Schicht an den identifizierten Schichtübergängen berechnet werden. Nachdem die für die Schichtübergänge charakteristischen Merkmale im Auswertesignal extrahiert wurden, können Zielwerte wie Mittelpunktpositionen, Radien und im Anschluss die Schichtdicken der entsprechenden Schichten berechnet werden. Die Mittelpunktpositionen und Radien werden dabei pro Schichtübergang ermittelt. Für jeden Schichtübergang müssen zwei Positionen pro Messachse des Röntgenmesssystems gefunden werden, zwei auf jeder Seite von beispielsweise zwei senkrecht zueinander stehenden Messachsen, jeweils auf einer Seite des Gegenstands, zum Beispiel eines Wellrohrs. Hierzu kann zunächst ein Winkel ermittelt werden, der zwischen der Messachse und einer direkten Verbindung von der punktförmigen Röntgenquelle zu jedem der entsprechenden Detektorwerte der charakteristischen Merkmale auf dem Röntgendetektor liegt. Die Mitte des Gegenstands, zum Beispiel eines Wellrohrs, befindet sich auf einem Strahl zwischen der Röntgenquelle und dem Röntgendetektor, der in einem Winkel zur Messachse stehen kann. Unter Berücksichtigung des geometrischen Aufbaus der Messachse, insbesondere der Abstände zwischen Röntgenquelle und Röntgendetektor, wird die Mittelpunktposition der jeweiligen Schicht berechnet. Für den Radius der Schicht wird ein halber Öffnungswinkel bestimmt, den die Verbindungen von der punktförmigen Röntgenquelle zu den Positionen der charakteristischen Merkmale auf dem Röntgendetektor zwischen sich aufspannen. Die Schichtdicken bzw. Wandstärken können anschließend berechnet werden, sofern die Mittelpunktpositionen und Radien beider Schichtübergänge der jeweiligen Schicht bestimmt wurden. Dazu müssen lediglich die Radien unter Berücksichtigung einer möglichen Dezentrierung voneinander subtrahiert werden.

Die erfindungsgemäße Vorrichtung kann zur Durchführung des erfindungsgemäßen Verfahrens ausgebildet sein. Entsprechend kann das erfindungsgemäße Verfahren mit der erfindungsgemäßen Vorrichtung durchgeführt werden.

Ausführungsbeispiele der Erfindung werden nachfolgend anhand von Figuren näher erläutert. Es zeigen schematisch:
- Figur 1: eine erfindungsgemäße Vorrichtung in einer ersten Ansicht,
- Figur 2: eine teilweise Querschnittsansicht eines Wellrohrs mit veranschaulichtem Sensorfeld eines Röntgendetektors der erfindungsgemäßen Vorrichtung,
- Figur 3: eine vergrößerte Veranschaulichung eines Teils der Figur 1,
- Figur 4: Diagramme zur Veranschaulichung von Messsignalen des Röntgendetektors,
- Figur 5: weitere Diagramme zur Veranschaulichung von Messsignalen des Röntgendetektors,
- Figur 6: ein Diagramm zur Veranschaulichung der Erzeugung eines Auswertesignals gemäß dem erfindungsgemäßen Verfahren, und
- Figur 7: eine erfindungsgemäße Vorrichtung nach einem weiteren Ausführungsbeispiel in einer ersten Ansicht.

Soweit nichts anderes angegeben ist, bezeichnen in den Figuren gleiche Bezugszeichen gleiche Gegenstände.

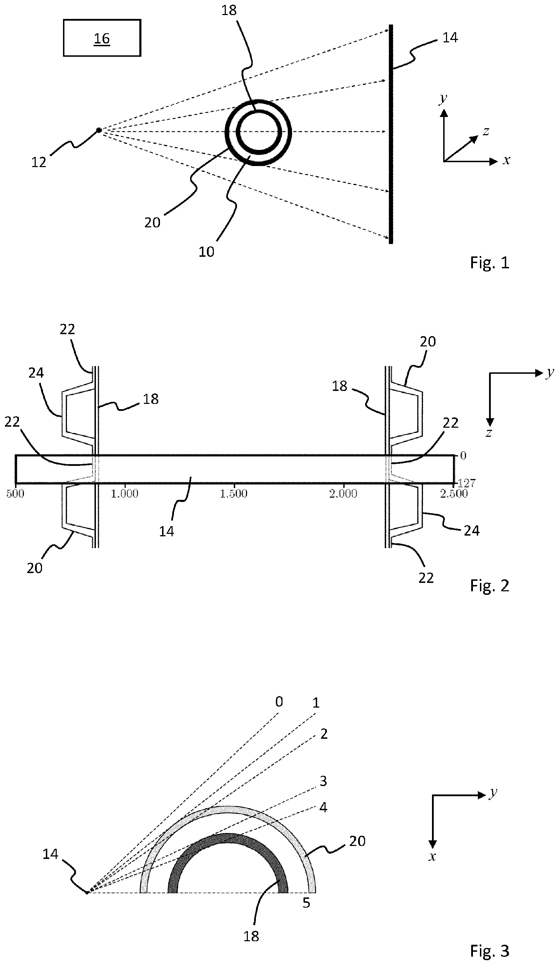

Die in Figur 1 dargestellte Vorrichtung zum Bestimmen mindestens eines Geometrieparameters eines Wellrohrs 10 umfasst eine im Wesentlichen punktförmige Röntgenquelle 12, die in Figur 1 zumindest in der durch die x- und y-Achse des dargestellten kartesischen Koordinatensystems aufgespannten Ebene divergente Röntgenstrahlung aussendet, wie in Figur 1 durch gestrichelte Linien veranschaulicht. Die Röntgenquelle kann auch in Längsrichtung des Wellrohrs 10, also in Fig. 1 in der durch die x- und z-Achse aufgespannten Ebene divergente Röntgenstrahlung aussenden. Die Längsachse des Wellrohrs 10 verläuft in Figur 1 in Richtung der z-Achse, also in die Zeichenebene hinein. Das Wellrohr 10 kann während der Messung entlang einer Förderrichtung durch den Messbereich der Vorrichtung gefördert werden, wobei die Förderrichtung der Längsachse des Wellrohrs 10 entspricht, in Figur 1 also wiederum in z-Richtung verläuft. Die Vorrichtung kann hierzu eine entsprechende Fördereinrichtung umfassen.

Das Wellrohr 10 wird von der durch die Röntgenquelle 12 ausgesandten Röntgenstrahlung im dargestellten Beispiel senkrecht zu seiner Längsrichtung divergent in der x-y-Ebene bestrahlt. Sofern die Röntgenstrahlung auch in der x-z-Ebene in Figur 1 divergiert, wird das Wellrohr 10 auch in seiner Längsrichtung bestrahlt. Die Röntgenstrahlung durchstrahlt das Wellrohr 10 und wird nach Durchstrahlen des Wellrohrs 10 von einem ortsauflösenden Röntgendetektor 14 als senkrecht zur Längsrichtung des Wellrohrs 10, vorliegend in Richtung der y-Achse, ortsaufgelöstes Messsignal detektiert. Der ortsauflösende Röntgendetektor 14 ist im vorliegenden Beispiel zumindest in y-Richtung ortsauflösend. Er kann auch in z-Richtung, also entlang der Längsachse des Wellrohrs 10, ortsauflösend sein. Der Röntgendetektor 14 kann eine zweidimensionale Szintillatorschicht mit nachgeordnetem zweidimensionalen Sensor-Array, zum Beispiel CCD-Array, umfassen. Die Messsignale des Röntgendetektors 14 liegen an einer Auswerteeinrichtung 16 an, die diese in nachfolgend näher erläuterter Weise zum Bestimmen eines Geometrieparameters des Wellrohrs 10 verarbeitet.

In dem dargestellten Beispiel umfasst das Wellrohr 10 eine Innenschicht 18 in Form eines Glattrohrs und eine auf der Innenschicht 18 angeordnete Wellschicht 20 mit einer periodischen Wellform. In Figur 2 ist das Wellrohr 10 ausschnittsweise in einer Längsschnittansicht dargestellt. Dabei sind annähernd zwei Perioden der Wellform der Wellschicht 20 zu erkennen. Insbesondere ist zu erkennen, dass die Wellschicht 20 im Bereich der Wellentäler 22 unmittelbar auf der Innenschicht 18 aufliegt, während im Bereich der Wellenberge 24 ein Abstand zwischen der Wellschicht 20 und der Innenschicht 18 besteht, der mit Luft gefüllt ist. Hieraus folgt, dass im Bereich der Wellentäler 22 zwei Schichtübergänge zu Luft vorliegen, nämlich einerseits zwischen der Außenseite der Wellschicht 20 und Luft und andererseits zwischen der Innenseite der Innenschicht 18 und Luft. Im Bereich der Wellenberge 24 liegen dagegen vier Schichtübergänge vor, nämlich zwei zwischen der Wellschicht 20 und Luft und zwei zwischen der Innenschicht 18 und Luft. Diese Schichtübergänge sollen erfindungsgemäß ermittelt werden, so dass hieraus in dem Fachmann an sich bekannter Weise Geometrieparameter wie zum Beispiel die Schichtdicke (Wandstärke) der Innenschicht 18 und/oder der Wellschicht 20 bestimmt werden können. In Figur 2 ist außerdem das zweidimensionale Sensor-Array des Röntgendetektors 14 zu erkennen, wobei in dem dargestellten Beispiel 2.000 Pixel des Arrays in y-Richtung und 128 Pixel des Arrays in z-Richtung gezeigt sind. Wird das Wellrohr 10 im Betrieb entlang seiner Längsachse, also in z-Richtung, gefördert, detektiert das Sensor-Array des Röntgendetektors 14 also abwechselnd Röntgenstrahlung nach Durchstrahlen der Wellentäler 22 und der Wellenberge 24 mit den dazwischenliegenden Flanken. In Figur 1 ist in der Schnittansicht des Wellrohrs 10 also gerade ein Wellenberg 24 zu sehen, so dass zwischen der Innenschicht 18 und der Wellschicht 20 ein Abstand vorliegt.

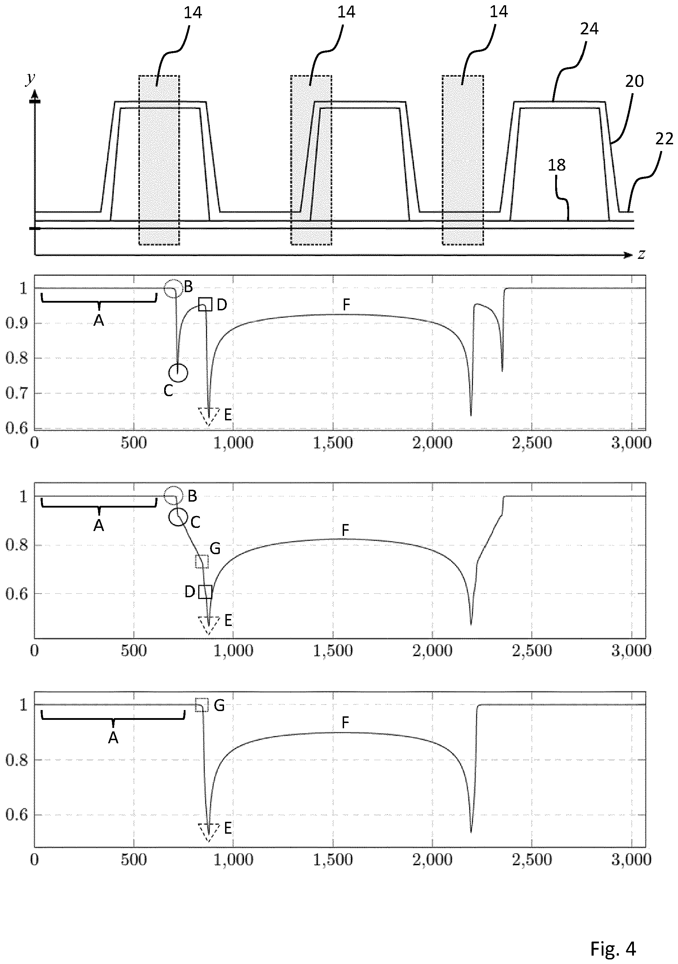

Anhand einer vergrößerten Ausschnittsdarstellung der Figur 1 soll anhand Figur 3 und unter Bezug auf Figur 4 das sich auf dem Röntgendetektor 14 ergebende senkrecht zur Längsachse des Wellrohrs 10 ortsaufgelöste Absorptionssignal näher erläutert werden. In Figur 4 ist für drei Ortszustände des Wellrohrs 10 in Bezug auf den Röntgendetektor 14 in Form von drei Diagrammen ein sich ergebendes Absorptionssignal dargestellt, wobei jeweils eine statische Aufnahme eines nicht bewegten Wellrohrs 10 gezeigt ist. Es liegt also lediglich eine Ortsunschärfe aufgrund der zweidimensionalen Ausdehnung des Röntgendetektors 14 vor, insbesondere wenn über die Zeilen des Röntgendetektors 14 in z-Richtung gemittelt wird. Die Achsangaben im obersten Diagramm in Figur 4 beziehen sich wie in Figur 2 auf den Röntgendetektor 14 entsprechend Figur 1. In den unteren drei Diagrammen in Figur 4 ist jeweils die Intensität in beliebigen Einheiten über den Pixeln des Sensor-Arrays des Röntgendetektors 14 in y-Richtung, also senkrecht zur Längsachse des Wellrohrs 10 aufgetragen.

Das unterste Diagramm in Figur 4 entspricht dem in Figur 4 oben rechts dargestellten Ortszustand, bei dem der Röntgendetektor 14 ausschließlich Röntgenstrahlung empfängt, die ein Wellental 22 durchstrahlt hat. Das in Figur 4 zweite Diagramm von unten zeigt den in Figur 4 oben in der Mitte gezeigten Ortszustand, bei dem der Röntgendetektor 14 Röntgenstrahlung empfängt, die eine Flanke zwischen einem Wellental 22 und einem Wellenberg 24 sowie kurze Abschnitte des Wellentals 22 und des Wellenbergs 24 durchstrahlt hat. Das zweite Diagramm von oben in Figur 4 zeigt den in Figur 4 oben links dargestellten Ortszustand, bei dem der Röntgendetektor 14 ausschließlich Röntgenstrahlung empfängt, die einen Wellenberg 24 durchstrahlt hat. Dieser Ortszustand ist auch in Figur 3 dargestellt. In den in Figur 4 oben links und rechts dargestellten idealen Zuständen wirkt sich die Ortsunschärfe nicht auf das Signal aus, da das Wellrohr 10 im betrachteten Bereich seine Form nicht verändert.

In Figur 3 sind zur Veranschaulichung sechs Strahllinien 0 bis 5 der von der Röntgenquelle 12 ausgesandten divergenten Röntgenstrahlung gestrichelt eingezeichnet. Zwischen den Strahllinien 0 und 1 gelangt die Röntgenstrahlung frei an dem Wellrohr 10 vorbei. Es erfolgt entsprechend keine Absorption, was sich in Figur 4 in dem zweiten Diagramm von oben in Form eines konstanten Intensitätsmaximums im Bereich A widerspiegelt. Jeder Schichtübergang zwischen Luft und einer Schicht des Wellrohrs 10 führt zunächst zu einem Intensitätsabfall, wie in Figur 4 im zweiten Diagramm von oben bei B eingezeichnet. Zwischen den Strahllinien 1 und 2 in Figur 3 nimmt die Sehnenlänge durch den Kunststoff der Wellschicht 20 zu und entsprechend die Absorption der Röntgenstrahlung, was zu einer Verringerung des Intensitätswerts im zweiten Diagramm von oben in Figur 4 zwischen den Punkten B und C führt. Im Punkt C in Figur 4 entsprechend der Strahllinie 2 in Figur 3 ist die maximale Sehnenlänge für die Wellschicht 20 erreicht, was in dem im zweiten Diagramm von oben in Figur 4 bei C eingezeichneten lokalen Minimum des Intensitätsverlaufs resultiert. Nachfolgend zwischen den Strahllinien 2 und 3 in Figur 3 steigt die Intensität aufgrund einer Verringerung der beiden durchstrahlten Sehnenanteile der Wellschicht 20 wieder zu bis zum Erreichen der Strahllinie 3, ab dem neben dem Beitrag zur Absorption der beiden Sehnen der Wellschicht 20 nun zusätzlich das Material der Innenschicht 18 zur Absorption der Röntgenstrahlung beiträgt. Ab der Strahllinie 3, verringert sich die empfangene Intensität entsprechend wieder, wie im zweiten Diagramm von oben in Figur 4 bei D eingezeichnet. Aufgrund der Zunahme der Sehnenlänge der durchstrahlten Innenschicht 18 sinkt der Intensitätspegel bis zur Strahllinie 4 in Figur 3, wodurch sich das im zweiten Diagramm von oben in Figur 4 bei E eingezeichnete absolute Minimum des Intensitätsverlaufs ergibt. Ab der Strahllinie 4 nimmt die Absorption bis zur Strahllinie 5 in Figur 3 aufgrund einer Verringerung der beteiligten Sehnenlängen der Innenschicht 18 und der Wellschicht 20 wieder zu bis zum Erreichen des im zweiten Diagramm von oben in Figur 4 eingezeichneten lokalen Maximums bei F zu. Im weiteren Verlauf ergibt sich im Idealfall eine symmetrische Intensitätskurve für die in Figur 3 nicht dargestellte andere Hälfte des Wellrohrs 10.

In dem in Figur 4 im untersten Diagramm dargestellten Fall, bei dem der Röntgendetektor 14 ausschließlich Röntgenstrahlung empfängt, die ein Wellental 22 durchstrahlt hat, weist der Intensitätsverlauf erkennbar weniger charakteristische Merkmale auf als im vorstehend diskutierten Fall. Insbesondere liegen hier nur zwei Schichtübergänge vor, wie eingangs erläutert. Das in Figur 4 im zweiten Diagramm von oben eingezeichnete absolute Intensitätsminimum E ist auch in dem in Figur 4 im untersten Diagramm dargestellten Ortszustand in der Intensitätskurve identifizierbar. Insbesondere die charakteristischen Merkmale B, C und D im Kurvenverlauf sind im untersten Diagramm in Figur 4 allerdings nicht erkennbar. Dafür ist ein weiteres charakteristisches Merkmal G zu erkennen, nämlich wenn die Röntgenstrahlung auf den Schichtübergang zwischen der Außenseite der unmittelbar auf der Innenschicht 18 aufliegenden Wellschicht 20 zu Luft trifft. Dieses charakteristische Merkmal G ist entsprechend in dem zweiten Diagramm von oben in Figur 4 nicht zu erkennen.

In dem zweiten Diagramm von unten in Figur 4 ist der Intensitätsverlauf zu dem im obersten Diagramm von Figur 4 in der Mitte dargestellten Ortszustand gezeigt, bei dem der Röntgendetektor 14 Röntgenstrahlung empfängt, die eine Flanke zwischen einem Wellental 22 und einem Wellenberg 24 und Teile des Wellentals 22 und des Wellenbergs 24 durchstrahlt hat. Es ist zu erkennen, dass in diesem Intensitätsverlauf alle charakteristischen Merkmale A bis G der beiden weiteren in Figur 4 aufgetragenen Intensitätsverläufe im durch den Röntgendetektor 14 detektierten Signal enthalten sind. Gegenüber den beiden weiteren Intensitätsverläufen in Figur 4 sind einige Merkmale, insbesondere die Merkmale C, G und D relativ schwierig zu identifizieren, insbesondere aufgrund des Einflusses der Flanke zwischen dem Wellental 22 und dem Wellenberg 24. So ist die Ausprägung dieser Merkmale vergleichsweise gering, sie sind aber dennoch erkennbar.

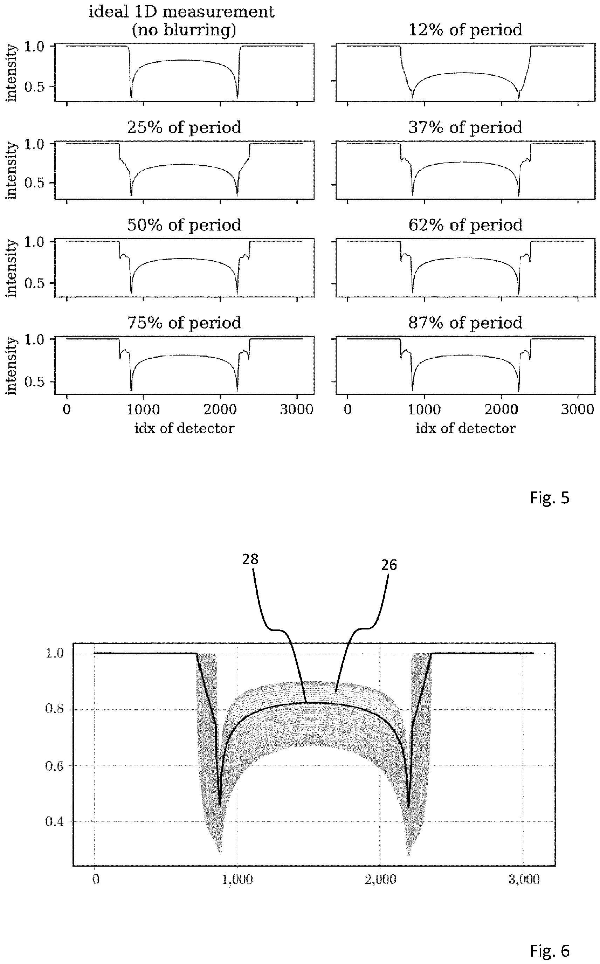

Ausgehend von den vorstehend erläuterten Erkenntnissen beruht die Erfindung auf dem Gedanken, dass eine Unschärfe in Längsrichtung des Wellrohrs 10 in der Intensitätsaufnahme des Röntgendetektors 14, insbesondere eine Orts- und/oder Bewegungsunschärfe, also eine Überlagerung von Röntgenstrahlung, die verschiedene Bereiche des Wellrohrs 10 durchstrahlt hat, das Auffinden von für die zu identifizierenden Schichtübergänge charakteristischen Merkmalen in dem Intensitätssignal des Röntgendetektors 14 verbessern kann. In Figur 5 ist die Veränderung eines durch den Röntgendetektor 14 aufgenommenen Intensitätsverlaufs mit Zunahme des die Unschärfe abbildenden Messabschnitts, zu dem der Röntgendetektor 14 Röntgenstrahlung nach Durchstrahlen des Wellrohrs 10 empfängt, dargestellt, vorliegend als prozentualer Anteil der erfassten Periode der Wellform der Wellschicht 20. Dabei ist jeweils die Intensität in beliebigen Einheiten über den Sensorpixeln des Sensor-Arrays in der Richtung senkrecht zur Längsachse des Wellrohrs 10, also der y-Richtung, dargestellt. Es ist erkennbar, dass sich die Anzahl der auswertbaren charakteristischen Merkmale für Schichtübergänge in dem Intensitätssignal mit Erhöhung des Sichtfelds des Röntgendetektors 14, also des Messabschnitts, erhöht. Dies gilt in dem dargestellten Beispiel insbesondere ab einem Messabschnitt, der sich über 25 % der Periode der Wellschicht 20 erstreckt. Sobald ein Wellenberg 24 und ein Wellental 22 zusammen mit der dazwischen liegenden Flanke ausreichend erkannt werden, lassen sich als Minima und/oder Maxima und/oder Änderungen der Steigung und/oder Unstetigkeiten im Intensitätsverlauf fünf für Schichtübergänge zwischen Luft und der Wellschicht 20 bzw. der Innenschicht 18 charakteristische Merkmale identifizieren, nämlich die Merkmale B, C, D, E und G, wie in Figur 4 eingezeichnet. Eine weitere Vergrößerung des Messabschnitts auf mehr als 25 % der Periode der Wellschicht 20 resultiert in einer verbesserten Ausprägung dieser charakteristischen Merkmale, was die Auswertung weiter verbessert. Sobald dagegen benachbarte weitere Flanken der Wellform der Wellschicht 20 in den Messabschnitt einfließen, kann es zu einer Verschlechterung der Merkmalsausprägung kommen. Erstreckt sich der Messabschnitt über mehr als eine Periode der Wellform der Wellschicht 20, ist davon auszugehen, dass die Merkmale keine störungsfreie Güte mehr aufweisen.

Wie anhand Figur 2 dargestellt, besitzt der Röntgendetektor 14 in Längsrichtung des Wellrohrs 10, in Figur 1 also in z-Richtung, eine Ortsauflösung. Beispielsweise kann der Sensor in dieser Richtung 128 Zeilen besitzen. In Figur 6 sind die Messwerte über die beispielsweise 128 Zeilen in Längsrichtung des Wellrohrs 10 als eine Schar von grauen, senkrecht zur Längsrichtung des Wellrohrs 10 ortsaufgelösten Intensitätsverläufen als Messsignale 26 des Röntgendetektors 14 dargestellt. Diese durch den Röntgendetektor 14 empfangenen Messsignale 26 werden durch die Auswerteeinrichtung 16 zu einem ebenfalls senkrecht zur Längsrichtung des Wellrohrs 10 ortsaufgelösten, in Figur 6 als schwarz durchgezogene Linie dargestellten Auswertesignal 28 zusammengeführt, im vorliegenden Beispiel durch Mittelung über die Schar 26 an Messsignalen. In dem Auswertesignal 28 können durch die Auswerteeinrichtung 16 nun die oben erläuterten charakteristischen Merkmale, insbesondere die fünf Minima und/oder Maxima und/oder Änderungen der Steigung und/oder Unstetigkeiten B, C, D, E und G als Schichtübergänge zwischen dem Wellrohr 10, insbesondere der Innenschicht 18 sowie der Wellschicht 20 mit Luft identifiziert werden. Die Identifizierung dieser Merkmale und damit der Schichtübergänge kann durch Verwendung von Algorithmen des maschinellen Lernens, insbesondere unter Nutzung künstlicher neuronaler Netze, vereinfacht werden. Anhand der so identifizierten Schichtübergänge kann unter Kenntnis der geometrischen Verhältnisse, insbesondere des Abstands zwischen Röntgenquelle 12 und Röntgendetektor 14 sowie gegebenenfalls des Orts des Wellrohrs 10 trigonometrisch als Geometrieparameter die Schichtdicke, also die Wandstärke, der Innenschicht 18 und der Wellschicht 20 berechnet werden, wie oben erläutert und dem Fachmann grundsätzlich bekannt.

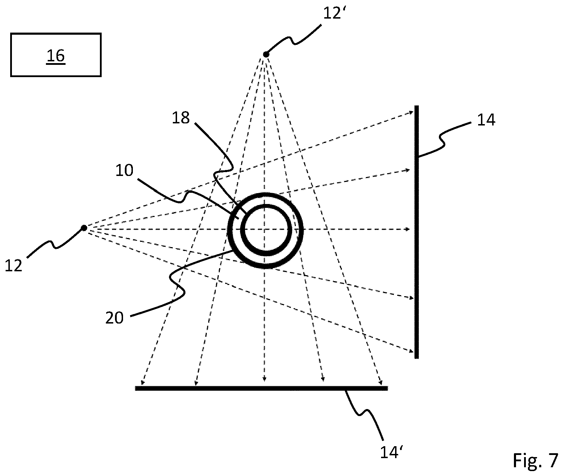

Figur 7 zeigt eine erfindungsgemäße Vorrichtung nach einem weiteren Ausführungsbeispiel, bei der eine weitere Messachse durch eine zweite Röntgenquelle 12' und einen zweiten Röntgendetektor 14` gebildet ist, die senkrecht zu der durch die erste Röntgenquelle 12 und den ersten Röntgendetektor 14 gebildeten Messachse ausgerichtet ist. Die zweite Röntgenquelle 12' und der zweite Röntgendetektor 14` können insbesondere identisch ausgebildet sein wie die erste Röntgenquelle 12 bzw. der erste Röntgendetektor 14. Auch die Auswertung der durch den zweiten Röntgendetektor 14` empfangenen Messsignale kann durch die Auswerteeinrichtung 16 in gleicher Weise erfolgen wie zu den Messsignalen des ersten Röntgendetektors 14. Wie oben erläutert, können durch die Nutzung zweier Messachsen zum Beispiel die Mittelpunktpositionen von einzelnen Schichten bestimmt werden. Daraus lassen sich Radien und auf dieser Grundlage Wanddicken ableiten, sofern mindestens zwei Schichtübergänge bestimmt wurden.

Obgleich die Erfindung anhand der Ausführungsbeispiele für ein Wellrohr erläutert wurde, kann es sich anstelle des Wellrohrs auch um einen anderen länglichen Gegenstand mit einer periodischen Struktur handeln. Auch könnte das Wellrohr selbstverständlich weiterer Wellschichten aufweisen, wie eingangs erläutert.

### Bezugszeichenliste

- 10: Wellrohr
- 12: Röntgenquelle
- 12`: Röntgenquelle
- 14: Röntgendetektor
- 14`: Röntgendetektor
- 16: Auswerteeinrichtung
- 18: Innenschicht
- 20: Wellschicht
- 22: Wellental
- 24: Wellenberg
- 26: Messsignale
- 28: Auswertesignal

## Patentansprüche

1. Verfahren zum Bestimmen mindestens eines Geometrieparameters eines länglichen Gegenstands (10) mit einer periodischen Struktur, insbesondere eines Wellrohrs (10), welches eine Wellschicht (20) mit einer periodischen Wellform umfasst, bei dem der Gegenstand (10) mit quer zu seiner Längsrichtung divergenter Röntgenstrahlung bestrahlt wird und die Röntgenstrahlung nach Durchstrahlen des Gegenstands (10) von einem ortsauflösenden Röntgendetektor (14) als quer zur Längsrichtung des Gegenstands (10) ortsaufgelöstes Messsignal detektiert wird,
**dadurch gekennzeichnet, dass** mit der Röntgenstrahlung ein sich in Längsrichtung des Gegenstands (10) erstreckender Messabschnitt des Gegenstands (10) bestrahlt wird, dass der Röntgendetektor (14) zu der den Messabschnitt durchstrahlenden Röntgenstrahlung eine Mehrzahl von quer zur Längsrichtung des Gegenstands (10) ortsaufgelösten Messsignalen (26) detektiert, dass die Messsignale (26) zu einem quer zur Längsrichtung des Gegenstands (10) ortsaufgelösten Auswertesignal (28) zusammengeführt werden, dass in dem Auswertesignal (28) Schichtübergänge innerhalb des Gegenstands und/oder zwischen dem Gegenstand (10) und einem den Gegenstand (10) umgebenden Medium an mehreren Orten des Messabschnitts identifiziert werden, und dass auf Grundlage der identifizierten Schichtübergänge mindestens ein Geometrieparameter des Gegenstands (10) bestimmt wird.

2. Verfahren nach Anspruch 1, **dadurch gekennzeichnet, dass** der Gegenstand (10) während des Durchstrahlens mit Röntgenstrahlung entlang einer Förderrichtung gefördert wird.

3. Verfahren nach einem der vorhergehenden Ansprüche, **dadurch gekennzeichnet, dass** die den Gegenstand (10) bestrahlende Röntgenstrahlung auch in Längsrichtung des Gegenstands (10) divergent ist und/oder dass der Röntgendetektor (14) auch in Längsrichtung des Gegenstands (10) ortsauflösend ist.

4. Verfahren nach einem der vorhergehenden Ansprüche, **dadurch gekennzeichnet, dass** der Röntgendetektor (14) einen Szintillator und ein Sensor-Array, insbesondere ein CCD-Array, umfasst.

5. Verfahren nach einem der vorhergehenden Ansprüche, **dadurch gekennzeichnet, dass** sich der Messabschnitt über mindestens 20%, vorzugsweise mindestens 40%, einer Periode der periodischen Struktur des Gegenstands (10) erstreckt.

6. Verfahren nach einem der vorhergehenden Ansprüche, **dadurch gekennzeichnet, dass** sich der Messabschnitt über zumindest einen Teil eines Wellenbergs (24) und eines Wellentals (22) der periodischen Struktur des Gegenstands (10) und über eine Flanke zwischen dem Wellenberg (24) und dem Wellental (22) der periodischen Struktur des Gegenstands (10) erstreckt.

7. Verfahren nach einem der vorhergehenden Ansprüche, **dadurch gekennzeichnet, dass** sich der Messabschnitt über nicht mehr als 100%, vorzugsweise nicht mehr als 75%, einer Periode der periodischen Struktur des Gegenstands (10) erstreckt.

8. Verfahren nach einem der vorhergehenden Ansprüche, **dadurch gekennzeichnet, dass** sich der Messabschnitt über nicht mehr als einen Wellenberg (24) und ein Wellental (22) der periodischen Struktur des Gegenstands (10) und eine Flanke zwischen dem Wellenberg (24) und dem Wellental (22) der periodischen Struktur des Gegenstands (10) erstreckt.

9. Verfahren nach einem der vorhergehenden Ansprüche, **dadurch gekennzeichnet, dass** zum Zusammenführen der Messsignale (26) zu dem quer zur Längsrichtung des Gegenstands (10) ortsaufgelösten Auswertesignal (28) ein Mittelwert der über den Messabschnitt detektierten Messsignale (26) gebildet wird.

10. Verfahren nach einem der vorhergehenden Ansprüche, **dadurch gekennzeichnet, dass** Schichtübergänge anhand von Minima und/oder Maxima und/oder Änderungen der Steigung und/oder Unstetigkeiten in dem Auswertesignal (28) identifiziert werden.

11. Verfahren nach Anspruch 10, **dadurch gekennzeichnet, dass** Schichtübergänge anhand von mindestens zwei, vorzugsweise mindestens drei, weiter vorzugsweise mindestens vier, Minima und/oder Maxima und/oder Änderungen der Steigung und/oder Unstetigkeiten in dem Auswertesignal (28) identifiziert werden.

12. Verfahren nach einem der vorhergehenden Ansprüche, **dadurch gekennzeichnet, dass** die Schichtübergänge anhand der Minima und/oder Maxima und/oder Änderungen der Steigung und/oder Unstetigkeiten in dem Auswertesignal (28) mit Algorithmen des maschinellen Lernens identifiziert werden, vorzugsweise unter Verwendung künstlicher neuronaler Netze.

13. Verfahren nach einem der vorhergehenden Ansprüche, **dadurch gekennzeichnet, dass** als mindestens ein geometrischer Parameter eine Schichtdicke des Gegenstands (10), insbesondere der Wellschicht (20) und/oder einer Innenschicht (18) eines Wellrohrs (10) bestimmt wird.

14. Verfahren nach einem der vorhergehenden Ansprüche, **dadurch gekennzeichnet, dass** der Gegenstand (10) aus zwei Richtungen mit quer zu seiner Längsrichtung divergenter Röntgenstrahlung bestrahlt wird und die Röntgenstrahlung nach Durchstrahlen des Gegenstands (10) von mindestens zwei ortsauflösenden Röntgendetektoren (14, 14`) als quer zur Längsrichtung des Gegenstands (10) ortsaufgelöste Messsignale detektiert wird, wobei mit der Röntgenstrahlung aus den zwei Richtungen jeweils ein sich in Längsrichtung des Gegenstands (10) erstreckender Messabschnitt des Gegenstands (10) bestrahlt wird, wobei die Röntgendetektoren (14, 14`) zu der die Messabschnitte durchstrahlenden Röntgenstrahlung jeweils eine Mehrzahl von quer zur Längsrichtung des Gegenstands (10) ortsaufgelösten Messsignalen (26) detektieren, und wobei die von den Röntgendetektoren (14, 14`) detektierten Messsignale (26) jeweils zu einem quer zur Längsrichtung des Gegenstands (10) ortsaufgelösten Auswertesignal (28) zusammengeführt werden, wobei in den Auswertesignalen (28) Schichtübergänge innerhalb des Gegenstands und/oder zwischen dem Gegenstand (10) und einem den Gegenstand (10) umgebenden Medium an mehreren Orten des Messabschnitts identifiziert werden, und dass auf Grundlage der identifizierten Schichtübergänge mindestens ein Geometrieparameter des Gegenstands (10) bestimmt wird.

15. Vorrichtung zum Bestimmen mindestens eines Geometrieparameters eines länglichen Gegenstands (10) mit einer periodischen Struktur, insbesondere eines Wellrohrs (10), welches eine Wellschicht (20) mit einer periodischen Wellform umfasst, umfassend eine Röntgenquelle (12), die ausgebildet ist, den Gegenstand (10) mit quer zu seiner Längsrichtung divergenter Röntgenstrahlung zu bestrahlen, und umfassend einen ortsauflösenden Röntgendetektor (14), der ausgebildet ist, die Röntgenstrahlung nach Durchstrahlen des Gegenstands (10) als quer zur Längsrichtung des Gegenstands (10) ortsaufgelöstes Messsignal zu detektieren,
**dadurch gekennzeichnet, dass** die Röntgenquelle (12) weiter ausgebildet ist, einen sich in Längsrichtung des Gegenstands (10) erstreckenden Messabschnitt des Gegenstands (10) mit Röntgenstrahlung zu bestrahlen, und dass der Röntgendetektor (14) weiter ausgebildet ist, zu der den Messabschnitt durchstrahlenden Röntgenstrahlung eine Mehrzahl von quer zur Längsrichtung des Gegenstands (10) ortsaufgelösten Messsignalen (26) zu detektieren, dass die Vorrichtung weiter eine Auswerteeinrichtung (16) umfasst, die ausgebildet ist, die Messsignale (26) zu einem quer zur Längsrichtung des Gegenstands (10) ortsaufgelösten Auswertesignal (28) zusammenzuführen, in dem Auswertesignal (28) Schichtübergänge innerhalb des Gegenstands und/oder zwischen dem Gegenstand (10) und einem den Gegenstand (10) umgebenden Medium an mehreren Orten des Messabschnitts zu identifizieren und auf Grundlage der identifizierten Schichtübergänge mindestens einen Geometrieparameter des Gegenstands (10) zu bestimmen.

16. Vorrichtung nach Anspruch 15, **dadurch gekennzeichnet, dass** sie zwei Röntgenquellen (12, 12`) umfasst, die ausgebildet sind, den Gegenstand (10) aus verschiedenen Richtungen mit quer zu seiner Längsrichtung divergenter Röntgenstrahlung zu bestrahlen, und dass die Vorrichtung zwei Röntgendetektoren (14, 14`) umfasst, die ausgebildet sind, die Röntgenstrahlung nach Durchstrahlen des Gegenstands (10) als quer zur Längsrichtung des Gegenstands (10) ortsaufgelöste Messsignale zu detektieren, wobei die Röntgenquellen (12, 12`) jeweils ausgebildet sind, einen sich in Längsrichtung des Gegenstands (10) erstreckenden Messabschnitt des Gegenstands (10) mit Röntgenstrahlung zu bestrahlen, und wobei die Röntgendetektoren (14, 14`) ausgebildet sind, zu der den Messabschnitt durchstrahlenden Röntgenstrahlung jeweils eine Mehrzahl von quer zur Längsrichtung des Gegenstands (10) ortsaufgelösten Messsignalen (26) zu detektieren, und wobei die Auswerteeinrichtung (16) ausgebildet ist, die Messsignale (26) jeweils zu einem quer zur Längsrichtung des Gegenstands (10) ortsaufgelösten Auswertesignal (28) zusammenzuführen, in den Auswertesignalen (28) Schichtübergänge innerhalb des Gegenstands und/oder zwischen dem Gegenstand (10) und einem den Gegenstand (10) umgebenden Medium an mehreren Orten des Messabschnitts zu identifizieren und auf Grundlage der identifizierten Schichtübergänge mindestens einen Geometrieparameter des Gegenstands (10) zu bestimmen.

17. Vorrichtung nach einem der Ansprüche 15 oder 16, **dadurch gekennzeichnet, dass** die Vorrichtung zur Durchführung des Verfahrens nach einem der Ansprüche 1 bis 14 ausgebildet ist.
